# FASCICULE DE BREVET EUROPEEN

(11) **EP 2 168 703 B1**
(45) Date de publication et mention de la délivrance du brevet: **25.10.2017**
(21) Numéro de dépôt: 09305813.9
(22) Date de dépôt: 04.09.2009
(51) Int. Cl.: B23B 31/02, B23B 31/107

(54) **Porte-outil à réglage axial**
Werkzeugträger mit Axialverstellung
Tool holder with axial adjustment

(30) Priorité: 12.09.2008 FR 0856145
(43) Date de publication de la demande: 31.03.2010
(73) Titulaire: SECO - E.P.B., 67330 Bouxwiller (FR)
(72) Inventeur: Freyermuth, Alain, 67350 Pfaffenhofen (FR); Heyd, Willy, 67330 Dossenheim sur Zinsel (FR)
(74) Mandataire: Nuss, Laurent

(56) Documents cités:
- CA-A- 972 943
- DE-A1- 2 727 838
- FR-A- 1 595 136
- FR-A1- 2 567 432
- US-A- 2 990 188

## Description

La présente invention concerne le domaine de la fabrication de porte-outils monoblocs, modulaires, ou autres mis en oeuvre dans des machines multibroches, multipostes de travail, pour le montage précisément identique d'outils sur de telles machines et a pour objet un porte-outil à réglage axial.

Le réglage axial d'outils est généralement réalisé au moyen de douilles de réglage montées dans les porte-outils.

Les outils utilisés sur les machines multibroches usinant des pièces identiques en même temps nécessitent un réglage axial d'outils particulièrement précis, ce pour respecter strictement les opérations des différentes pièces, à savoir le fraisage, l'alésage, le dressage, le contournage, etc.

Dans de telles machines, chaque outil doit être parfaitement préréglé en longueur et d'une manière strictement identique d'une broche à l'autre, c'est-à-dire avec la même précision.

A cet effet, il a été proposé, par FR-A-2 590 819, un tel dispositif, essentiellement constitué par un attachement pourvu d'un emmanchement de montage dans les broches de machine du type cône standard américains, cône morse ou à queue cylindrique et autres, et logeant, dans son extrémité opposée à l'emmanchement, une pièce mobile du type monobloc ou du type modulaire de réception d'un outil. Dans ce dispositif, le logement de réception de la pièce mobile de l'attachement est sous forme de deux alésages de diamètre différent, dont le plus grand s'étend à partir de la face de l'attachement et est relié au plus petit à l'intérieur dudit attachement, ces alésages présentant une longueur telle qu'elle permet un centrage long de la pièce mobile. Par ailleurs, l'attachement est pourvu, au niveau du plus grand alésage, d'une part, d'au moins deux vis de blocage et de réglage de la pièce mobile coopérant avec des rainures inclinées inversées de forme sphérique de la pièce mobile et, d'autre part, d'au moins un élément de guidage monté en saillie dans l'un des alésages et coopérant avec une rainure correspondante de la pièce mobile.

Ce dispositif permet d'améliorer sensiblement la précision du montage, mais est relativement complexe, de sorte que le montage et le réglage d'un outil sont relativement longs, ce qui entraîne des temps de préparation également importants, notamment pour l'équipement de machines multibroches et multipostes.

On connaît également, par CA-A-972 943, un porte-outil de perçage et de lamage à changement rapide, dans lequel la réalisation du changement rapide s'effectue au moyen de quelques billes de maintien qui peuvent être amenées en position de libération de l'outil par déplacement d'un manchon, mais qui ne peuvent en aucun cas réaliser un serrage de la queue de l'outil, du fait qu'elles ne permettent pas d'obtenir une rigidité suffisante du montage.

En effet, un tel serrage de la queue de l'outil au moyen des billes du dispositif de changement rapide serait incompatible avec un montage rigide, parce que le réglage par l'écrou solidaire de la cage logeant les billes serait impossible.

D'après ce document CA-A-972 943, il n'est nullement prévu un dispositif de serrage par traction, qui coopérerait avec une partie correspondante d'une pièce mobile. En effet, la vis de serrage du support manchon du moyen de changement rapide ne peut servir au blocage de la pièce mobile après réglage. Cette vis sert donc uniquement à maintenir le support sur lequel est monté le manchon permettant un montage et un démontage rapides et cette vis n'est nullement destinée à serrer la queue de l'outil qui deviendrait indémontable.

Par ailleurs, FR-A-1 595 136 décrit un dispositif de réglage, dans lequel un moyen de déplacement de l'outil sur le porte-outil n'est pas lié en translation avec le corps du porte-outil, le réglage pouvant uniquement être réalisé dans une direction par un serrage plus ou moins important de ce moyen sur la queue de l'outil. Il en résulte forcément un réglage moins précis, ce plus particulièrement du fait de l'indépendance totale de ce moyen de déplacement par rapport au porte outil. Finalement, FR-A-2 567 432 décrit un porte-outil selon la préambule de la revendication 1.

La présente invention a pour but de pallier ces inconvénients en proposant porte-outil à réglage axial de constitution simple et de mise en oeuvre rapide.

A cet effet, le porte-outil à réglage axial, qui est essentiellement constitué par un corps principal avec attachement, dans un logement duquel est monté à coulissement une pièce mobile de montage d'un outil, la pièce mobile de montage d'un outil coopérant avec une bague de réglage en translation se présentant sous forme d'un manchon muni d'un filetage intérieur, caractérisé en ce que la bague de réglage en translation est montée libre en rotation sur l'extrémité du corps principal comportant le logement de montage de ladite pièce mobile de montage d'un outil et solidarisée en translation avec ladite extrémité, par l'intermédiaire d'un dispositif à billes, ledit dispositif à billes présentant un jeu de fonctionnement axial garantissant, lors du serrage de la pièce mobile, une application de la face proximale de la bague de réglage contre un épaulement externe d'appui correspondant du corps principal, la pièce mobile étant bloquée en position de service, après réglage, par l'intermédiaire d'au moins un dispositif de serrage par traction coopérant avec une partie correspondante de la pièce mobile.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une vue éclatée en perspective d'un porte-outil conforme à l'invention ;
la figure 2 est une vue du porte-outil en position montée en coupe au droit du dispositif de serrage par traction
la figure 3 est une vue en coupe analogue à celle de la figure 2, au droit du dispositif de positionnement en rotation et de guidage en translation et
la figure 4 est une vue en coupe à plus grande échelle représentant le porte-outil en position démontée dans l'orientation correspondant à celle selon la figure 3.

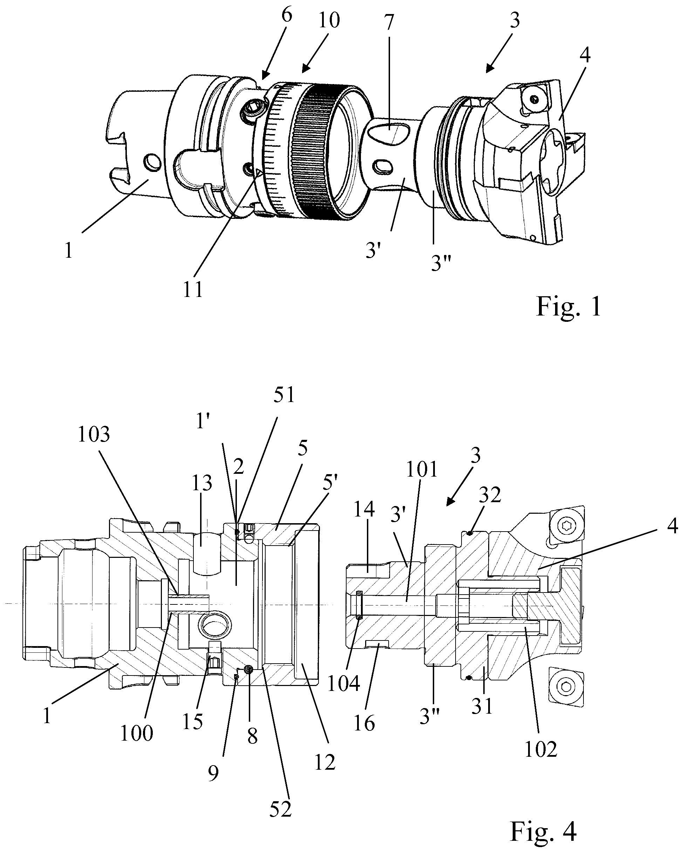

Les figures 1 à 4 des dessins annexés représentent un porte-outil à réglage axial, qui est essentiellement constitué par un corps principal 1 avec attachement, dans un logement 2 duquel est monté à coulissement une pièce mobile 3 de montage d'un outil 4.

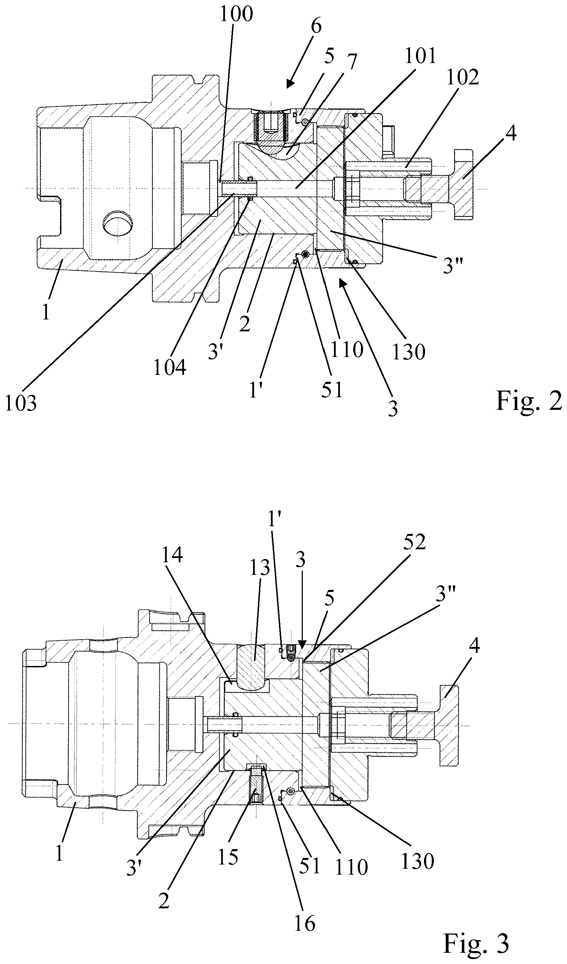

Conformément à l'invention, la pièce mobile 3 de montage d'un outil 4 coopère avec une bague de réglage en translation 5, montée libre en rotation sur l'extrémité du corps principal 1 comportant le logement 2 de montage de ladite pièce mobile 3 de montage d'un outil 4 et solidarisée en translation avec ladite extrémité, par l'intermédiaire d'un dispositif à billes 8, et se présentant sous forme d'un manchon muni d'un filetage intérieur 5', ledit dispositif à billes 8 présentant un jeu de fonctionnement axial garantissant, lors du serrage de la pièce mobile 3, une application de la face proximale 51 de la bague de réglage 5 contre un épaulement externe distal d'appui correspondant 1' du corps principal 1, la pièce mobile 3 étant bloquée en position de service, après réglage, par l'intermédiaire d'au moins un dispositif de serrage 6 par traction coopérant avec une partie correspondante 7 de la pièce mobile 3 (fig. 1 et 2).

Le guidage en rotation et la solidarisation en translation de la bague de réglage en translation 5 sur l'extrémité du corps principal 1, par l'intermédiaire d'un dispositif à billes 8, permettent, grâce au jeu de fonctionnement dudit dispositif à billes 8, lors du serrage de la pièce mobile 3, un déplacement suffisant de la bague de réglage en translation 5 pour appliquer sa face proximale 51 contre l'épaulement externe distal d'appui correspondant 1' du corps principal 1. Il en résulte que le réglage de l'outil peut être réalisé de manière particulièrement précise, tout jeu de fonctionnement étant éliminé lors du serrage de la pièce mobile 3.

En outre, selon une autre caractéristique de l'invention, un joint périphérique 9 est interposé entre la face proximale 51 de la bague de réglage 5 et l'épaulement externe d'appui correspondant 1' du corps principal 1. Ainsi une étanchéité parfaite est assurée entre le corps principal 1 et la face correspondante de la bague de réglage 5, de sorte que toute fuite de liquide de coupe est évitée.

Par ailleurs, la bague de réglage en translation 5 est avantageusement pourvue d'un vernier 10 coopérant avec un index correspondant 11 prévu sur le corps principal 1.

La pièce mobile 3, qui présente une partie 3' d'emmanchement dans le logement 2 du corps principal 1 et qui porte, à l'extrémité opposée, l'outil 4, est pourvue d'une section filetée 3" de diamètre correspondant à celui du filetage intérieur 5' de la bague de réglage 5. En outre, la pièce mobile 3 présente, entre l'outil 4 et sa section filetée 3", un épaulement 31 pourvu d'un joint périphérique 32, cet épaulement étant guidé, en position de service, dans un lamage 12 correspondant prévu à l'extrémité libre de la bague de réglage 5. Ainsi, dans la position de service du porte-outil, la pièce mobile 3 est maintenue dans le logement 2 du corps principal 1, et donc dans le corps principal 1, par coopération du filetage intérieur 5' de la bague 5 avec la section filetée 3", l'épaulement 31 pénétrant dans le lamage 12 assurant, par l'intermédiaire du joint périphérique 32, l'étanchéité frontale du porte-outil.

Selon une autre caractéristique de l'invention, et comme le montre notamment les figures 3 et 4 des dessins annexés, la pièce mobile 3 est guidée en translation et maintenue en rotation par l'intermédiaire d'une broche radiale 13 coopérant avec une rainure longitudinale 14 prévue sur une portion de la longueur de la partie 3' d'emmanchement dans le logement 2 du corps principal 1, une vis 15 traversant la paroi du logement 2, sensiblement diamétralement à la broche radiale 13, coopérant avec une rainure fermée 16 prévue sur ladite partie 3' d'emmanchement pour réaliser une limitation de la course de la pièce mobile 3. Ainsi, la pièce mobile 3 peut être parfaitement positionnée radialement, avec une liberté de déplacement axial dans le logement 2, en vue de son réglage définitif en position et de son blocage par serrage au moyen du dispositif de serrage 6, la broche radiale 13 pouvant contribuer, par ailleurs, à son entraînement en rotation.

Le dispositif de serrage 6 (figures 1 et 2) se présente préférentiellement sous forme d'au moins une vis à bout sphérique traversant radialement la paroi du logement 2 du corps principal 1 et coopérant avec au moins une partie correspondante 7 de la pièce mobile 3. Cette partie 7 de la pièce mobile 3 est avantageusement sous forme d'un évidement allongé, incliné à partir de l'extrémité libre de la partie 3' d'emmanchement en direction de la portion filetée 3" et se terminant en portion de sphère.

Ainsi, lors du serrage de la vis à bout sphérique formant le dispositif de serrage 6, celle-ci a tendance à progresser vers le fond de l'évidement formant la partie 7 prévue dans la partie 3' d'emmanchement de la pièce mobile 3, de sorte que cette dernière a tendance à être tirée vers le fond du logement 2 du corps principal 1 et que tout jeu de fonctionnement entre la bague de réglage 5 et la portion filetée 3" de la pièce mobile 3 est totalement compensée, par résorption du jeu de fonctionnement du dispositif à billes 8. De préférence, le dispositif est pourvu d'au moins deux dispositifs de serrage 6 décalés angulairement, afin d'assurer un serrage uniforme de la partie mobile 3 dans le corps principal 1. Bien entendu, il peut également être prévu trois dispositifs 6 disposés radialement, à intervalles réguliers de 120° l'un de l'autre.

Selon une caractéristique de l'invention, la bague de réglage 5 présente, du côté de son emmanchement sur l'extrémité correspondante du corps principal 1, un épaulement interne 52, en retrait par rapport à son extrémité distale 51 et délimitant, en position de montage sur le corps principal 1, avec la face correspondante de ce dernier, un jeu de fonctionnement longitudinal 110 et, la portion filetée 3" de la pièce mobile 3 présente une longueur au plus égale à la longueur du filetage intérieur de la bague de réglage 5, l'épaulement 31 prolongeant cette portion filetée 3" étant décalée par rapport à cette dernière d'un jeu 130 légèrement inférieur à celui, 110 prévu entre l'épaulement interne de la bague de réglage 5 et la face correspondante du corps principal 1 (figures 2 et 3).

La prévision de ces différents jeux permet d'éviter, dans tous les cas que, lors du réglage de position de l'outil 4 au moyen de la bague de réglage 5, la pièce mobile 3 entre en contact d'appui par sa portion filetée 3" contre l'extrémité correspondante du corps principal 1 sur lequel est guidé ladite bague de réglage 5. Un réglage longitudinal de l'outil 4 est donc pratiquement possible sur la plus grande longueur de la portion filetée 3".

Les dispositifs porte-outils de ce type, sont généralement munis, de manière connue, de moyens de lubrification de l'outil de coupe consistant en un canal central 100 traversant le corps principal 1 et prolongé dans la pièce mobile 3 par un canal central 101 pour aboutir à des canaux de distribution longitudinaux 102 radiaux ou autres prévus près de l'extrémité de la pièce mobile 3 recevant l'outil 4.

Selon une autre caractéristique de l'invention, pour assurer une étanchéité constante du canal central 100 formant le moyen de lubrification, entre le corps principal 1 et le canal central 101 de la pièce mobile 3, il est avantageusement prévu un tube de raccordement 103 collé ou fretté dans la partie de canal central 100 du corps principal 1 et guidé de manière étanche en translation dans le canal central 101 de la pièce mobile 3 par l'intermédiaire d'un joint annulaire 104. Ainsi, quelle que soit la position réglée de la pièce mobile 3 et de l'outil par rapport au corps principal 1, la lubrification de l'outil 4 est toujours assurée suivant un parcours parfaitement étanchéifié.

Le montage de la pièce mobile 3 dans le logement 2 du corps principal 1 s'effectue par présentation de sa partie 3' d'emmanchement devant le logement 2, l'axe longitudinal de la rainure 14 de ladite partie 3' étant dans l'alignement de l'axe de la broche radiale 13. Après enfoncement de la partie 3' dans le logement 2 et arrivée en butée de la portion filetée 3" avec l'extrémité de la partie filetée intérieure de la bague de réglage 5, cette dernière est vissée sur ladite portion 3", de sorte que la pièce mobile 3 est tirée à l'intérieur du logement 2. Après un enfoncement complémentaire, correspondant à un vissage complémentaire de la bague 5, la vis 15 est actionnée afin d'amener son extrémité dans la rainure fermée 16 et de limiter ainsi la course de la pièce mobile 3 et, de ce fait, un retrait non désiré du corps principal 1.

Le réglage définitif de position de l'outil 4 peut alors être effectué de manière très précise par actionnement de la bague de réglage 5, le déplacement pouvant être vérifié par lecture du vernier 10, équipant la bague 5 en relation, en relation avec l'index 11.

Dès atteinte de la position requise de l'outil 4 par rapport au corps principal 1, il suffit de bloquer cette position par serrage de la ou des vis formant le dispositif de serrage 6.

Grâce à l'invention, il est possible de réaliser un porte-outil à réglage axial, permettant un positionnement particulièrement précis de l'outil et, dans le cas d'utilisation d'outils identiques, en relation avec des machines multi-broches et/ou multi-postes, des outils précisément identiques.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention défini dans les revendications.

## Revendications

1. Porte-outil à réglage axial, essentiellement constitué par un corps principal (1) avec attachement, dans un logement (2) duquel est monté à coulissement une pièce mobile (3) de montage d'un outil (4), la pièce mobile (3) de montage d'un outil (4) coopérant avec une bague de réglage en translation (5) se présentant sous forme d'un manchon muni d'un filetage intérieur, **caractérisé en ce que** la bague de réglage en translation (5) est montée libre en rotation sur l'extrémité du corps principal (1) comportant le logement (2) de montage de ladite pièce mobile (3) de montage d'un outil (4) et solidarisée en translation avec ladite extrémité, par l'intermédiaire d'un dispositif à billes (8), ledit dispositif à billes (8) présentant un jeu de fonctionnement axial garantissant, lors du serrage de la pièce mobile (3), une application de la face proximale (51) de la bague de réglage (5) contre un épaulement externe distal d'appui correspondant (1') du corps principal (1), la pièce mobile (3) étant bloquée en position de service, après réglage, par l'intermédiaire d'au moins un dispositif de serrage (6) par traction coopérant avec une partie correspondante (7) de la pièce mobile (3).

2. Porte-outil, suivant la revendication 1, **caractérisé en ce qu'**un joint périphérique (9) est interposé entre la face proximale (51) de la bague de réglage (5) et l'épaulement externe d'appui correspondant (1') du corps principal (1).

3. Porte-outil, suivant l'une quelconque des revendications 1 et 2, **caractérisé en ce que** la bague de réglage en translation (5) est pourvue d'un vernier (10) coopérant avec un index correspondant (11) prévu sur le corps principal (1).

4. Porte-outil, suivant la revendication 1, **caractérisé en ce que** la pièce mobile (3), qui présente une partie (3') d'emmanchement dans le logement (2) du corps principal (1) et qui porte, à l'extrémité opposée, l'outil (4), est pourvue d'une section filetée (3") de diamètre correspondant à celui du filetage intérieur (5') de la bague de réglage (5).

5. Porte-outil, suivant l'une quelconque des revendications 1 et 4, **caractérisé en ce que** la pièce mobile (3) présente, entre l'outil (4) et sa section filetée (3"), un épaulement (31) pourvu d'un joint périphérique (32), cet épaulement étant guidé, en position de service, dans un lamage (12) correspondant prévu à l'extrémité libre de la bague de réglage (5).

6. Porte-outil, suivant l'une quelconque des revendications 1, 4 et 5, **caractérisé en ce que** la pièce mobile (3) est guidée en translation et maintenue en rotation par l'intermédiaire d'une broche radiale (13) coopérant avec une rainure longitudinale (14) prévue sur une portion de la longueur de la partie (3') d'emmanchement dans le logement (2) du corps principal (1), une vis (15) traversant la paroi du logement (2), sensiblement diamétralement à la broche radiale (13), coopérant avec une rainure fermée (16) prévue sur ladite partie (3') d'emmanchement pour réaliser une limitation de la course de la pièce mobile (3).

7. Porte-outil, suivant la revendication 1, **caractérisé en ce que** le dispositif de serrage (6) se présente sous forme d'au moins une vis à bout sphérique traversant radialement la paroi du logement (2) du corps principal (1) et coopérant avec au moins une partie correspondante (7) de la pièce mobile (3).

8. Porte-outil, suivant la revendication 1, **caractérisé en ce que** la partie (7) de la pièce mobile (3) est sous forme d'un évidement allongé, incliné à partir de l'extrémité libre de la partie (3') d'emmanchement en direction de la portion filetée (3").

9. Porte-outil, suivant l'une quelconque des revendications 1, 7 et 8, **caractérisé en ce qu'**il est pourvu d'au moins deux dispositifs de serrage (6) décalés angulairement, afin d'assurer un serrage uniforme de la partie mobile (3) dans le corps principal (1).

10. Porte-outil, suivant l'une quelconque des revendications 1 à 6, **caractérisé en ce que** la bague de réglage (5) présente, du côté de son emmanchement sur l'extrémité correspondante du corps principal (1), un épaulement interne (52), en retrait par rapport à son extrémité distale (51) et délimitant, en position de montage sur le corps principal (1), avec la face correspondante de ce dernier, un jeu de fonctionnement longitudinal (110) et, la portion filetée (3") de la pièce mobile (3) présente une longueur au plus égale à la longueur du filetage intérieur de la bague de réglage (5), l'épaulement (31) prolongeant cette portion filetée (3") étant décalée par rapport à cette dernière d'un jeu (130) légèrement inférieur à celui (110) prévu entre l'épaulement interne de la bague de réglage (5) et la face correspondante du corps principal (1).

11. Porte-outil, suivant la revendication 1, muni de moyens de lubrification de l'outil de coupe (4) consistant en un canal central (100) traversant le corps principal (1) et prolongé dans la pièce mobile (3) par un canal central (101) pour aboutir à des canaux de distribution longitudinaux (102), radiaux ou autres, prévus près de l'extrémité de la pièce mobile (3) recevant l'outil (4), **caractérisé en ce qu'**il est pourvu d'un tube de raccordement (103) collé ou fretté dans la partie de canal central (100) du corps principal (1) et guidé de manière étanche en translation dans le canal central (101) de la pièce mobile (3) par l'intermédiaire d'un joint annulaire (104).

## Patentansprüche

1. Axial einstellbarer Werkzeughalter, im Wesentlichen bestehend aus einem Hauptkörper (1) mit Halter, in dem in einer Aufnahme (2) ein bewegliches Stück (3) zum Halten eines Werkzeugs (4) gleitend angebracht ist, wobei das bewegliche Stück (3) zum Halten eines Werkzeugs (4) mit einem Verschiebungseinstellring (5) zusammenwirkt, der die Form einer Hülse mit Innengewinde aufweist, **dadurch gekennzeichnet, dass** der Verschiebungseinstellring (5) auf dem Ende des Hauptkörpers (1), das die Aufnahme (2) zur Anbringung des genannten beweglichen Stückes (3) zum Halten eines Werkzeugs (4) aufweist, über eine Kugelvorrichtung (8) frei drehbar angebracht und gegen Verschiebung am genannten Ende befestigt ist, wobei die genannte Kugelvorrichtung (8) ein axial wirkendes Spiel aufweist, das beim Festklemmen des beweglichen Teils (3) ein Andrücken der proximalen Seite (51) des Einstellringes (5) an eine entsprechende externe distale Andrückschulter (1') des Hauptkörpers (1) sicherstellt, wobei das bewegliche Stück (3) nach Einstellung über mindestens eine Zugklemmvorrichtung (6), die mit einem entsprechenden Teil (7) des bewegliches Stückes (3) zusammenwirkt, in der Arbeitsstellung blockiert ist.

2. Werkzeughalter nach Patentanspruch 1, **dadurch gekennzeichnet, dass** eine periphere Dichtung (9) zwischen der proximalen Seite (51) des Einstellringes (5) und der entsprechenden äußeren Andrückschulter (1') des Hauptkörpers (1) eingefügt ist.

3. Werkzeughalter nach irgendeinem der Patentansprüche 1 und 2, **dadurch gekennzeichnet, dass** der Verschiebungseinstellring (5) mit einem Nonius (10) versehen ist, der mit einem entsprechenden auf dem Hauptkörper (1) vorgesehenen Zeiger (11) zusammenwirkt.

4. Werkzeughalter nach Patentanspruch 1, **dadurch gekennzeichnet, dass** das bewegliche Stück (3), das einen Teil (3') zum Einstecken in die Aufnahme (2) des Hauptkörpers (1) aufweist und am entgegengesetzten Ende das Werkzeug (4) trägt, mit einem Gewindeabschnitt (3") eines Durchmessers versehen ist, der dem des Innengewindes (5') des Einstellringes (5) entspricht.

5. Werkzeughalter nach irgendeinem der Patentansprüche 1 und 4, **dadurch gekennzeichnet, dass** das bewegliche Stück (3) zwischen dem Werkzeug (4) und seinem Gewindeabschnitt (3") eine mit einer peripheren Dichtung (32) versehene Schulter (31) aufweist, wobei diese Schulter in der Arbeitsstellung in einer entsprechenden Senkung (12) geführt wird, die am freien Ende des Einstellringes (5) vorgesehen ist.

6. Werkzeughalter nach irgendeinem der Patentansprüche 1, 4 und 5, **dadurch gekennzeichnet, dass** das bewegliche Stück (3) durch einen radialen Dorn (13), der mit einer auf einem Teil der Länge des Teils (3') zum Einstecken in die Aufnahme (2) des Hauptkörpers (1) vorgesehenen Längsrille (14) zusammenwirkt, für Verschiebungen geführt und gegen Drehungen gehalten wird, wobei eine Schraube (15), die die Wand der Aufnahme (2) im Wesentlichen diametral zum radialen Dorn (13) durchquert, mit einer geschlossenen Rille (16) zusammenwirkt, die auf dem genannten Einsteckteil (3') vorgesehen ist, um eine Begrenzung der Bewegung des beweglichen Teils (3) zu schaffen.

7. Werkzeughalter nach Patentanspruch 1, **dadurch gekennzeichnet, dass** die Klemmvorrichtung (6) die Form mindestens einer Schraube mit kugelförmigem Ende hat, die die Wand der Aufnahme (2) des Hauptkörpers (1) radial durchquert und mit mindestens einem entsprechenden Teil (7) des beweglichen Stückes (3) zusammenwirkt.

8. Werkzeughalter nach Patentanspruch 1, **dadurch gekennzeichnet, dass** der Teil (7) des beweglichen Stückes (3) die Form einer länglichen Aussparung hat, die vom freien Ende des Einsteckteils (3') aus in Richtung des Gewindeabschnitts (3") geneigt ist.

9. Werkzeughalter nach irgendeinem der Patentansprüche 1, 7 und 8, **dadurch gekennzeichnet, dass** er mit mindestens zwei um einen Winkel zueinander versetzten Klemmvorrichtungen (6) versehen ist, um eine gleichmäßige Klemmung des beweglichen Stückes (3) im Hauptkörper (1) sicherzustellen.

10. Werkzeughalter nach irgendeinem der Patentansprüche 1 bis 6, **dadurch gekennzeichnet, dass** der Einstellring (5) auf der Seite, auf der er in das entsprechende Ende des Hauptkörpers (1) eingesteckt ist, eine innere Schulter (52) aufweist, die gegenüber seinem distalen Ende (51) zurückspringt und in der auf dem Hauptkörper (1) montierten Stellung mit dessen entsprechender Seite ein Längsarbeitsspiel (110) begrenzt, und der Gewindeabschnitt (3") des beweglichen Stückes (3) eine Länge aufweist, die der Länge des Innengewindes des Einstellringes (5) höchstens gleich ist, wobei die Schulter (31) diesen Gewindeabschnitt (3") verlängert und dabei relativ zu diesem letzteren um ein Spiel (130) versetzt ist, das ein wenig geringer ist, als das (110) zwischen der inneren Schulter des Einstellringes (5) und der entsprechenden Seite des Hauptkörpers (1).

11. Werkzeughalter nach Patentanspruch 1, mit Schmierungsmitteln für das Schneidwerkzeug (4) versehen, bestehend aus einer zentralen Rinne (100), die den Hauptkörper (1) durchquert und im beweglichen Stück (3) durch eine zentrale Rinne (101) fortgesetzt wird, um in longitudinalen (102) radialen oder sonstigen Verteilrinnen zu münden, die nahe dem Ende des beweglichen Stückes (3) vorgesehen sind, das das Werkzeug (4) aufnimmt, **dadurch gekennzeichnet, dass** es mit einem Anschlussrohr (103) versehen ist, das in den Teil der zentralen Rinne (100) des Hauptkörpers (1) geklebt oder geschrumpft ist und für Verschiebungen in der zentralen Rinne (101) des beweglichen Stückes (3) über eine Ringdichtung (104) abgedichtet geführt wird.

## Claims

1. Tool-holder with axial adjustment, essentially consisting of a main body (1) with attachment, in a housing (2) of which is slidingly mounted a movable piece (3) for mounting a tool (4), the movable piece (3) for mounting a tool (4) cooperating with a translational adjustment ring (5) taking the form of a sleeve provided with an interior threading, **characterized in that** the translational adjustment ring (5) is mounted to rotate freely on the end of the main body (1) comprising the housing (2) for mounting said movable piece (3) for mounting a tool (4) and secured in translation with said end, via a ball device (8), said ball device (8) exhibiting an axial operating play guaranteeing, in the tightening of the movable piece (3), an application of the proximal face (51) of the adjustment ring (5) against a corresponding distal bearing outer shoulder (1') of the main body (1) the movable piece (3) being locked in service position, after adjustment, via at least one traction-based tightening device (6) cooperating with a corresponding part (7) of the movable piece (3).

2. Tool-holder, according to Claim 1, **characterized in that** a peripheral seal (9) is interposed between the proximal face (51) of the adjustment ring (5) and the corresponding bearing outer shoulder (1') of the main body (1).

3. Tool-holder, according to either one of Claims 1 and 2, **characterized in that** the translational adjustment ring (5) is provided with a vernier (10) cooperating with a corresponding index (11) provided on the main body (1).

4. Tool-holder, according to Claim 1, **characterized in that** the movable piece (3), which has a part (3') fitting into the housing (2) of the main body (1) and which bears, at the opposite end, the tool (4), is provided with a threaded section (3") of diameter corresponding to that of the interior threading (5') of the adjustment ring (5).

5. Tool-holder, according to either one of Claims 1 and 4, **characterized in that** the movable piece (3) has, between the tool (4) and its threaded section (3") a shoulder (31) provided with a peripheral seal (32), this shoulder being guided into service position, in a corresponding countersinking (12) provided at the free end of the adjustment ring (5).

6. Tool-holder, according to any one of Claims 1, 4 and 5, **characterized in that** the movable piece (3) is guided in translation and held in rotation via a radial pin (13) cooperating with a longitudinal groove (14) provided on a portion of the length of the part (3') fitting into the housing (2) of the main body (1), a screw (15) passing through the wall of the housing (2), substantially diametrically to the radial pin (13), cooperating with a closed groove (16) provided on said fitting part (3') to produce a limitation on the travel of the movable piece (3).

7. Tool-holder, according to Claim 1, **characterized in that** the tightening device (6) takes the form of at least one screw with spherical point passing radially through the wall of the housing (2) of the main body (1) and cooperating with at least one corresponding part (7) of the movable piece (3).

8. Tool-holder according to Claim 1, **characterized in that** the part (7) of the movable piece (3) is in the form of an elongate void, inclined from the free end of the fitting part (3') towards the threaded portion (3").

9. Tool-holder according to any one of Claims 1, 7 and 8, **characterized in that** it is provided with at least two tightening devices (6) that are angularly staggered, in order to ensure a uniform tightening of the movable piece (3) in the main body (1).

10. Tool-holder according to any one of Claims 1 to 6, **characterized in that** the adjustment ring (5) has, on the side of its fitting over the corresponding end of the main body (1), an internal shoulder (52), set back in relation to its distal end (51) and delimiting, in position of mounting on the main body (1), with the corresponding face thereof, a longitudinal operating play (110) and, the threaded portion (3") of the movable piece (3) has a length at least equal to the length of the interior threading of the adjustment ring (5), the shoulder (31) extending this threaded portion (3") being staggered in relation to the latter by a play (130) slightly less than that (110) provided between the internal shoulder of the adjustment ring (5) and the corresponding face of the main body (1).

11. Tool-holder, according to Claim 1, provided with means for lubricating the cutting tool (4) consisting of a central channel (100) passing through the main body (1) and extending in the movable piece (3) by a central channel (101) to culminate at longitudinal distribution channels (102), radial or otherwise, provided close to the end of the movable piece (3) receiving the tool (4), **characterized in that** it is provided with a coupling tube (103) glued or shrink-fitted in the part of central channel (100) of the main body (1) and tightly guided in translation in the central channel (101) of the movable piece (3) via an annular seal (104).
